# EUROPÄISCHE PATENTSCHRIFT

(11) **EP 2 546 095 B1**
(45) Veröffentlichungstag und Bekanntmachung des Hinweises auf die Patenterteilung: **15.06.2016**
(21) Anmeldenummer: 12174779.4
(22) Anmeldetag: 03.07.2012
(51) Int. Cl.: B60M 1/23

(54) **Dynamische Fahrdrahtklemme**
Dynamic contact wire clamp
Pince de fil conducteur dynamique

(30) Priorität: 15.07.2011 AT 10462011
(43) Veröffentlichungstag der Anmeldung: 16.01.2013
(73) Patentinhaber: European Trans Energy GmbH, 1100 Wien (AT)
(72) Erfinder: Hubert, Winter, 8811 Scheifling (AT)
(74) Vertreter: Puchberger, Peter

(56) Entgegenhaltungen:
- DE-C- 519 552
- GB-A- 811 230
- GB-A- 821 264
- GB-A- 2 151 572

## Beschreibung

Die Erfindung bezieht sich auf eine Aufhängung für den Oberleitungsfahrdraht elektrisch betriebener Fahrzeuge, insbesondere schienengebundener Fahrzeuge, bei welcher eine den Fahrdraht haltende Klemme an einem vertikal bewegbaren Halteorgan vorgesehen ist, wobei das vertikal bewegbare Halteorgan stabförmig ausbildet und in axialer Richtung geführt ist, und wobei das Halteorgan an seinem der Klemme abgewandten Ende mit einem, ein Herausfallen verhindernden Anschlag versehen ist.

Es ist z.B. aus der DE 519 552 C1 bekannt, die den Fahrdraht haltende Klemme an teleskopartig ineinander schiebbaren Teilen zu befestigen, wobei die teleskopartig ineinander schiebbaren Teile durch eine zentral vorgesehene Druckfeder im Sinne eines Ausfahrens der Teile vorbelastet sind. Diese bekannte Ausbildung hat den Nachteil, dass durch diese teleskopartig ineinander schiebbaren Teile eine exakte Führung in vertikaler Richtung nicht gegeben ist, wobei zudem Eckzugkräfte bzw. Schrägzugkräfte von dieser Halterung nicht aufgenommen werden können, da es durch schräg eingebrachte Kräfte zu einem Verkanten der teleskopartig ineinander schiebbaren Teile kommen kann, was dazu führt, dass ein Zusammenschieben nicht mehr möglich ist und die gesamte Aufhängung eine starre Aufhängung bildet.

Durch GB 811,230 ist eine Fahrdrahtaufhängung bekannt, bei welcher die den Fahrdraht haltende Klemme an einem in Axialrichtung verschiebbaren Stab gehalten ist, welcher in einer vom Tragseil herunterhängenden Führung in Vertikalrichtung geführt ist. Zum Verhindern des Herausfallens des die Halteklemme führenden Stabes ist an diesem ein Anschlag vorgesehen, welcher verhindert, dass der Stab aus der Führung herausgleiten kann. Die Führung ist dabei als Gleitführung ausgebildet, in welcher der Stab frei verschiebbar geführt ist.

Der Erfindung liegt nun die Aufgabe zu Grunde eine Aufhängung für den Oberleitungsfahrdraht zu schaffen, mit welcher eine exakte Vertikalfuhrung der Klemme erzielt wird, und zwar auch in jenen Bereichen, in welchen auf die Oberleitung nicht bloß das Eigengewicht wirkt, sondern auch Schräg- oder Eckzugkräfte aufzunehmen sind.

Erfindungsgemäß wird diese Aufgabe dadurch gelöst, dass zur Führung des Halteorgans in einem Gehäuse an je einer horizontalen Achse gelagerte Rollen am Gehäuse vorgesehen sind. Eine derartige Aufhängung hält den Fahrdraht lagerichtig in der gewünschten Stellung zum Stromabnehmer und hat zudem dynamisch günstigere Eigenschaften als die herkömmlichen Systeme. Herkömmliche Fahrdrahthalter übernehmen durch ihre Ausbildung die Schrägstellung, die zu haltenden Eckzüge auch anteilige Lasten. Durch die definierte Lastaufnahme der Klemme kann auf Stutzpunkthänger verzichtet werden, wobei zusätzlich auch der Einbau eines Y-Seiles entfallen kann. Weiters wird ein reibungsarmes lagerichtiges Führen des Halteorgans erzielt

Damit von den Rollen nicht nur radial wirkende Kräfte sondern auch in Achsrichtung der Rollen eingeleitete Kräfte aufgenommen werden können, können die Rollen am Außenmantel mit je einer umlaufenden Rille versehen sein, wobei die Rille im Eingriffsbereich mit dem stabförmigen Halteorgan vorzugsweise ein dem Profil des stabförmigen Halteorgans entsprechendes Gegenprofil aufweisen. Damit quer zur Gleislängsachse verlaufende Kräfte besonders sicher aufgenommen werden können, können die Achsen der Rollen parallel zur Längsachse des zugehörigen Gleises verlaufen. Damit werden die Hauptkräfte die dann quer zur Längsrichtung des Gleises verlaufen, in die Rollen radial eingebracht, womit ein Klemmen oder Herausspringen der Halteorgane aus den Rollen verhindert ist

Der Anschlag kann dabei über eine Druckfeder am Deckel des Gehäuses abgestützt sein, wodurch die gesamte Last am Stützpunkt sowie zumindest die halbe Last des Fahrdrahtes bis zu den angrenzenden Feldhängern durch die definierte Federkraft in der Aufhängung übernommen wird. Es wird damit das Anheben des Fahrdrahtes beim Vorbeifahren des Stromabnehmers im ersten Schritt erleichtert, wobei durch das Aufhören der Federkraft am Ende der Bewegung das gesamte Gewicht der Oberleitung auf dem Stromabnehmer aufliegt Diese Auflagekraft nimmt aufgrund der Federcharakteristik bis zum Ende der Aufwärtsbewegung des mit der Klemme versehenen Halteorgans zu und ergibt somit eine dynamische Auflagekraft der Oberleitung an dem Stromabnehmer.

Für eine besonders sichere Führung des Halteorgans und der Feder kann vom Deckel des Gehäuses ein nach außen gerichtetes koaxiales Anschlagrohr für das Halteorgan ausgehen, wobei in dem Anschlagrohr die Feder geführt ist, welche das Halteorgan außen umschlingt. Damit steht das Innere des Gehäuses zur Gänze zur Führung mittels der besagten Rollen zur Verfügung. Außerdem ist durch die Anordnung des Anschlagrohres verhindert, dass innerhalb des Gehäuses, in dem sich die Rollen befinden, auch noch die Führung für die Feder und Anschlag vorgesehen werden muss.

Das Gehäuse kann an einem Tragrohr eines herkömmlichen Auslegersystems befestigt sein, womit erreicht wird, dass herkömmliche Aufhängungen auf einfache Weise umgerüstet werden können. Dabei kann das Tragrohr parallel zur Neigung der Ebene des Gleises verlaufen, was den Vorteil hat, dass die Druckkräfte vom Stromabnehmer in axialer Richtung des Halteorgans eingebracht werden. Um diese Ausrichtung des Gehäuses im Bezug auf den Tragarm besonders genau einstellen zu können, weist das Gehäuse Langlöcher zur Aufnahme der Befestigungsmittel zum Verbinden mit dem Tragrohr auf. Damit ist eine Feinjustierung zusätzlich zu der Ausrichtung des Tragrohres ermöglicht.

können. Dabei kann das Tragrohr parallel zur Neigung der Ebene des Gleises verlaufen, was den Vorteil hat, dass die Druckkräfte vom Stromabnehmer in axialer Richtung des Halteorgans eingebracht werden. Um diese Ausrichtung des Gehäuses im Bezug auf den Tragarm besonders genau einstellen zu können, weist das Gehäuse Langlöcher zur Aufnahme der Befestigungsmittel zum Verbinden mit dem Tragrohr auf. Damit ist eine Feinjustierung zusätzlich zu der Ausrichtung des Tragrohres ermöglicht.

Zusammenfassend kann festgehalten werden, dass die Klemme durch die vertikale Führung des Fahrdraht bei Durchfahrt des Stromabnehmers den Fahrdraht lagerichtigen in Position hält, wogegen bei herkömmlichen Fahrdrahtseitenhaltern die nach Anhubkraft des Stromabnehmers der Fahrdraht in der Lage zum Stromabnehmer ausgedreht wird, was zu einer schrägen Beschleifung des Fahrdrahtes führen kann. Weitere Vorteile sind:
Durch die vertikale Führung des Fahrdrahtes ergibt sich auch eine definierte Anhubfreiheit am Stützpunkt. Diese wird auch durch einen Anschlag gewährleistet. Bei herkömmlichen Systemen kann hingegen diese Anhubfreiheit aufgrund der Parameter (wie z.B: Eckzug) variieren.

Durch die Konstruktion der Klemme am Auslenkungspunkt sind keine weiteren Bauteile für die seitliche Festlegung notwendig. Damit ergeben sich weiters keine Probleme bezüglich Bügelfreiheit von den Bauteilen der seitlichen Festlegung - speziell in Weichenbereichen; und keine Probleme mit Bauteilen von Nachbargleisen, welche eine andere Schaltgruppe aufweisen (wie z.B. zwei- oder mehrgleisige Strecken) - Arbeitssicherheit bei Bau und Erhaltung.

Die Übernahme der Last durch die Klemme ergibt auch den Vorteil, dass auf Mindesteckzüge des Fahrdrahtes in der Planung verzichtet werden kann. Dieser Mindesteckzug ergibt sich bei den herkömmlichen Ausbildungen aus der Notwendigkeit, dass die Seitenhalter zumindest kleine Teile der Stützpunktbelastungen übernehmen müssen, um keine "harten Punkte" zu bilden.

In der Zeichnung ist ein Ausführungsbeispiel des Erfindungsgegenstandes dargestellt.
Figur 1 zeigt eine herkömmliche Ausführung der Aufhängung des Oberleitungsdrahts für schienengebundene Fahrzeuge.
Figur 2 gibt in analoger Darstellung die erfindungsgemäß abgewandelte Ausführung der Aufhängung wieder.
Figur 3 veranschaulicht in größerem Maßstab die Fahrdrahtaufhängung als solche wobei Figur 3 einen Schnitt nach Linie III-III der Figur 4 ist.
Figur 4 ihrerseits ist ein Schnitt nach Linie IV-IV der Figur 3 in noch größerem Maßstab.

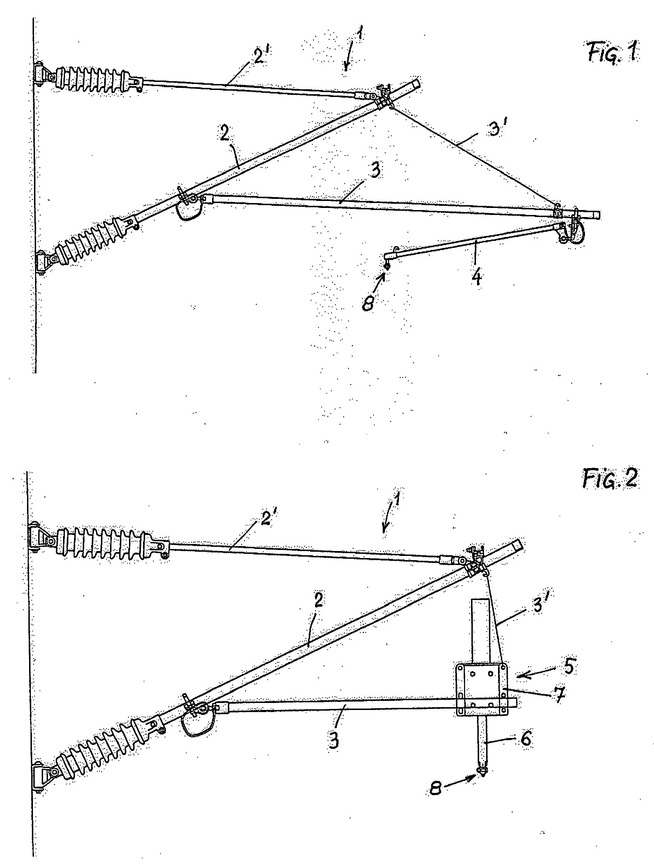

Bei einer herkömmlichen Abspannung 1 wird ein Auskragarm 2 durch einen Haltearm 2' über Isolatoren an einem tragenden Objekt, also einer Mauer oder einem Mast gehalten. Von dem Austragarm 2 geht ein Tragrohr 3 in etwa horizontaler Richtung aus, welches mittels eines Seiles 3' in dieser Lage gehalten ist. Bei einer Ausführung gemäß dem Stand der Technik wie sie in Figur 1 dargestellt ist, geht vom Ende des Tragrohres ein Spannarm 4 aus, welcher gelenkig mit dem Tragrohr 3 verbunden ist. Das Tragrohr 3 seinerseits ist gelenkig mit dem Auskragarm 2 verbunden, sodass unterschiedliche Längsbewegungen des Gehäuses 7 zum Austragarm 2 ausgeglichen werden können. Das Tragrohr 3 reicht dabei bis nahezu über die gesamte Gleisbreite, wobei sich der Spannarm 4 dann vom Ende des Tragrohrs 1 bis in die Mitte des Gleises erstreckt.

Bei der erfindungsgemäßen Ausbildung gemäß Figur 2 ist an dem Tragrohr 3 an Stelle des Spannarmes 4 eine Aufhängung 5 befestigt, wobei diese Aufhängung ebenfalls über ein Halteseil 3' gegen Absenken gehalten ist. Das Tragrohr 3 reicht dabei lediglich bis knapp über die Mitte des Gleises.

Die erfindungsgemäße Aufhängung 5 weißt ein Halteorgan 6 auf, das in einem Gehäuse 7 geführt ist und mittels eines Anschlages 14 gegen dem Herausfallen nach unten gesichert ist. An dem Anschlag 14 gegenüberliegenden Ende des Halteorgans 6 ist eine Klemme 8 für die Festlegung des Fahrdrahtes 9 vorgesehen.

Das Halteorgan 6 ist innerhalb des Gehäuses 7 zwischen Rollen 11 geführt, die über Achsen 10 am Gehäuse 7 befestigt sind.

Die Rollen 11 weisen auf ihrem Außenmantel Rillen 18 auf, deren Profil dem Außenprofil des Halteorgans 6 im Bereich der Rollen gegengleich ist.

Das Halteorgan 6 ist durch den Deckel 12 des Gehäuses 7 herausgeführt, wobei an dem oberen Bereich das Halteorgan durch eine Feder 13 umschlungen ist, die sich einerseits am Deckel 12 und andererseits am Anschlag 14 abstützt. Der Anschlag 14 seinerseits liegt nur dann kurzzeitig am Anschlagrohr 15 auf, welches die Feder 13 außen umgibt, wenn nach einer Bügeldurchfahrt das dadurch angehobene Halteorgan nach unten schwingt.

Das Gehäuse 7 ist am Tragrohr 3 mittels nicht dargestellter Bügel befestigt, welche durch Befestigungslöcher 16 und 17 in der Gehäuserückwand hindurch geführt und von der Vorderseite her verschraubt sind. An einer Seite des Gehäuses sind die Befestigungslöcher 16 als Langlöcher ausgeführt um eine winkelmäßige Einstellung des Gehäuses 7 in Bezug auf die Richtung des Tragrohres 3 zu ermöglichen.

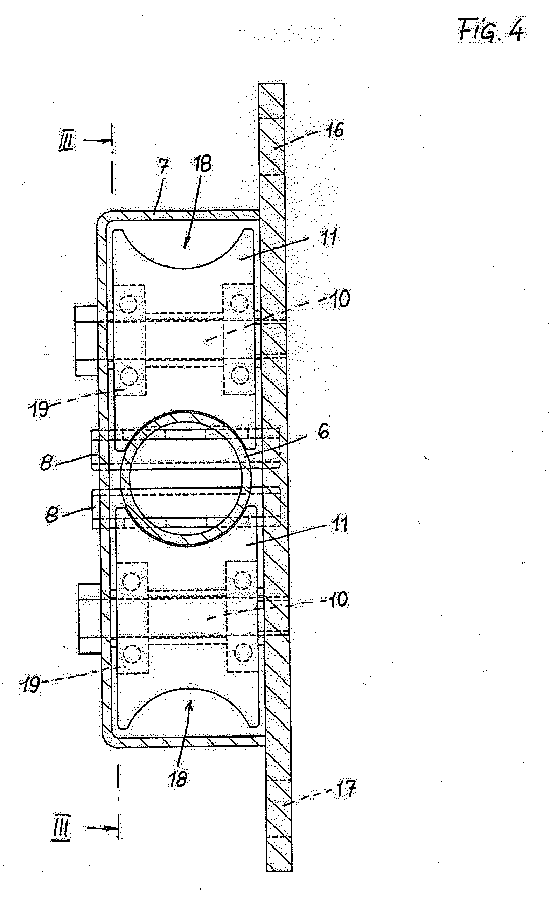

Wie aus Figur 4 ersichtlich, sind die Rollen 11 an den Achsen 12 über Lager 19 gelagert, um eine möglichst reibungsarme Verstellmöglichkeit des Halteorgans 6 in Bezug auf das Gehäuse 7 zu ermöglichen.

Am Deckel 12 des Gehäuses 7 ist noch ein, das Anschlagrohr 15 und den Anschlag 14 außen umgebenes Schutzrohr 20 vorgesehen, um das Eindringen von Schmutz oder Wasser in die erfindungsgemäße Vorrichtung zu verhindern.

In nicht dargestellter Weise kann an der den Anschlag 14 befestigenden Schraube 14' die Möglichkeit der Befestigung einer elektrischen Verbindung zum Stromausgleich angebracht werden.

Das Schutzrohr 20 ist in nicht dargestellter Weise an seinem freien Ende mittels eines Deckels abschließbar.

Die gesamte Aufhängung 5 ist dabei am Tragrohr 3 so angeordnet, dass der Druck des Stromabnehmerbügels in Achslängsrichtung dessen Tragrohres 6 erfolgt. Dazu ist neben der Einstellbarkeit über die als Langlöcher ausgebildeten Befestigungslöcher 16 auch noch die Länge des Halteseils 3' so eingestellt, dass das Tragrohr 3 annähernd parallel zur Ebene des Gleises verläuft. Dies bedeutet, dass beispielsweise in geneigten Gleisverläufen einer Kurve die Einstellung des Tragrohres 3 anders ist als in einer geraden Gleitführung, bei welcher der Tragarm 3 im Wesentlichen horizontal eingestellt ist.

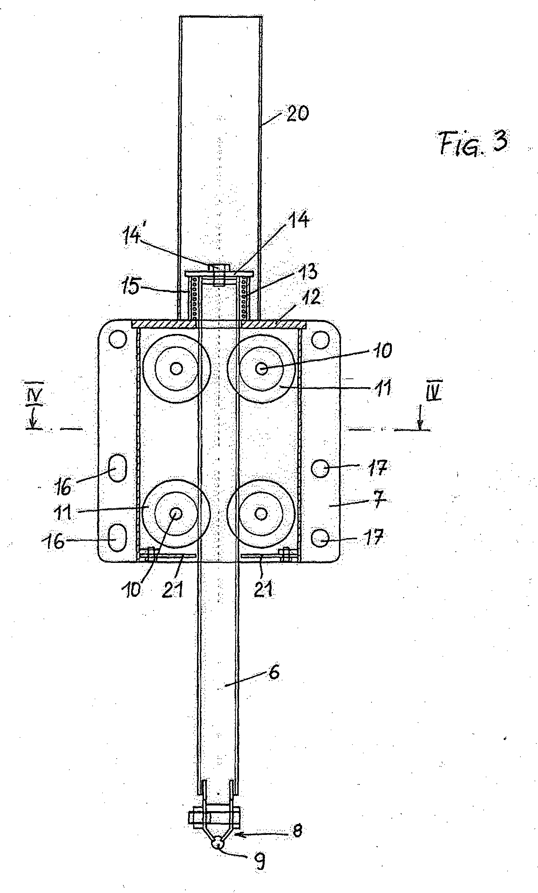

Bei in Betrieb befindlicher Vorrichtung befindet sich das Tragrohr 6 gegenüber dem Gehäuse 7 in der in Figur 3 wiedergegebenen Lage, bei welcher die Feder 13 zusammengedrückt ist und der Anschlag 14 nahezu am Anschlagrohr 15 aufliegt. Sobald der Fahrdraht 9 durch den darüber schleifenden Stromabnehmerbügel des Schienenfahrzeuges angehoben wird, erfolgt ein Verstellen des Halteorgans 6 in Achsrichtung, wobei die erste Anhebebewegung durch die Feder 13 unterstützt wird und damit ein leichtes Ausweichen des Halteorgans 6 in Bezug auf das Gehäuse 7 ermöglicht ist. Die Kraft der Feder 13 nimmt in Abhängigkeit von dem Ausmaß der Verstellung des Halteorgans 6 ab je weiter das Halteorgan 6 in das Gehäuse 7 eingeschoben wird. Sobald der Federweg der Feder 13 ausgeschöpft ist, liegt das gesamte Gewicht des Fahrdrahtes am Stromabnehmerbügel des Schienenfahrzeuges auf, womit ein sicheres Anliegen des Fahrdrahtes auf der Palette des Stromabnehmerbügels gewährleistet ist.

Außerdem erfolgt das Beschleifen des Fahrdrahtes 9 immer exakt am gleichen Bereich, da es zu einem seitlichen Verschwenken bzw. Verdrehen des Fahrdrahtes nicht kommen kann, wie es beispielsweise beim Stand der Technik gemäß Figur 1 in Anhängigkeit von der Schwenklage des Spannarmes 4 und in weiterer Folge des Tragrohres 13 auftreten könnte.

Quer zum Längsverlauf des Fahrdrahtes 9 auftretende Kräfte werden bei der erfindungsgemäßen Ausbildung durch die Lagerung 19 der Rollen 11 aufgefangen, wobei die in die Lagerung eingebrachten Kräfte radial auf die Rollen einwirken und damit zur Gänze von der Lagerung und der Achsen 10, der Rollen aufgenommen werden können. Allfällige in Richtung der Achsen 10, der Rollen 11 auftretende Kräfte werden dadurch kompensiert, dass die Ausnehmungen 18 der Rollen 11 kongruent mit den Außenprofil des Halteorgans 6 übereinstimmen, womit eine Führung des Halteorgans 6 auch dann zuverlässig möglich ist, wenn Kräfte in Längsrichtung des Fahrdrahtes 9 auftreten.
An der Unterseite des Gehäuses sind für den Arbeitnehmerschutz und gegen Verschmutzungen Abdeckungen 21 vorgesehen.

## Patentansprüche

1. Aufhängung für den Oberleitungs-Fahrdraht elektrisch betriebener Fahrzeuge, insbesondere schienengebundener Fahrzeuge, bei welcher eine den Fahrdraht haltende Klemme an einem vertikal bewegbaren Halteorgan vorgesehen ist, wobei das vertikal bewegbare Halteorgan (6) stabförmig ausgebildet und in einem Gehäuse in axialer Richtung geführt ist, wobei das Halteorgan (6) an seinem der Klemme (8) abgewandten Ende mit einem, ein Herausfallen verhindernden Anschlag (14) versehen ist, **dadurch gekennzeichnet, dass** zur Führung des Halteorgans (6) im Gehäuse (7) an je einer horizontalen Achse (10) gelagerte Rollen (11) am Gehäuse (7) vorgesehen sind.

2. Aufhängung nach Anspruch 1, **dadurch gekennzeichnet, dass** die Rollen (11) am Außenmantel mit je einer umlaufenden Rille (18) versehen sind, wobei die Rille (18) im Eingriffsbereich mit dem stabförmigen Halteorgan (6) vorzugsweise ein dem Profil des stabförmigen Halteorgans (6) entsprechendes Gegenprofil aufweist.

3. Aufhängung nach Anspruch 1 oder 2, **dadurch, gekennzeichnet, dass** die Achsen (10) der Rollen (11) parallel zur Längsachse eines zugehörigen Gleises Verlaufen.

4. Aufhängung nach einem der Ansprüche 1 bis 3, **dadurch gekennzeichnet, dass** der Anschlag (14) über eine Druckfeder (13) am Deckel des Gehäuses (12) abgestützt ist.

5. Aufhängung nach Anspruch 4, **dadurch gekennzeichnet, dass** vom Deckel (12) des Gehäuses ein nach außen gerichtetes koaxiales Anschlagrohr (15) für das Halteorgan (6) ausgeht, wobei in dem Anschlagrohr (15) die Feder (13) geführt ist, welche das Halteorgan (6) außen umschlingt.

6. Aufhängung nach einem der Ansprüche 1 bis 5, **dadurch gekennzeichnet, dass** das Gehäuse (7) an einem Tragrohr (3) eines herkömmlichen Auslegersystems (1) befestigt ist.

7. Aufhängung nach Anspruch 5, **dadurch gekennzeichnet, dass** das Tragrohr (3) parallel zur Neigung der Ebene des Gleises verläuft.

8. Aufhängung nach Anspruch 4 oder 5, **dadurch gekennzeichnet, dass** das Gehäuse (7) Langlöcher (16) zur Aufnahme der Befestigungsmittel zum Verbinden mit dem Tragrohr (3) aufweist.

## Claims

1. Suspension device for the overhead catenary wire of electrically operated vehicles, in particular railbound vehicles, in which a terminal retaining the catenary wire is provided on a vertically movable retaining member, wherein the vertically movable retaining member (6) is of rod-shaped configuration and is guided in a housing in the axial direction, wherein the retaining member (6) at the end thereof remote from the terminal (8) is provided with a stop (14) preventing said retaining member from falling out, **characterized in that** rollers (11) mounted on one respective horizontal axis (10) are provided on the housing (7) for guiding the retaining member (6) in the housing (7).

2. Suspension device according to Claim 1, **characterized in that** the rollers (11) are provided on the outer surface with one respective peripheral groove (18), wherein in the engagement region with the rod-shaped retaining member (6) the groove (18) preferably has a counter-profile corresponding to the profile of the rod-shaped retaining member (6).

3. Suspension device according to Claim 1 or 2, **characterized in that** the axes (10) of the rollers (11) extend parallel to the longitudinal axis of an associated track.

4. Suspension device according to one of Claims 1 to 3, **characterized in that** the stop (14) is supported on the top of the housing (12) via a compression spring (13).

5. Suspension device according to Claim 4, **characterized in that** an outwardly oriented coaxial stop tube (15) for the retaining member (6) extends from the top (12) of the housing, wherein the spring (13) which is outwardly wound around the retaining member (6) is guided in the stop tube (15).

6. Suspension device according to one of Claims 1 to 5, **characterized in that** the housing (7) is fastened to a supporting tube (3) of a conventional cantilever system (1).

7. Suspension device according to Claim 5, **characterized in that** the supporting tube (3) extends parallel to the inclination of the plane of the track.

8. Suspension device according to Claim 4 or 5, **characterized in that** the housing (7) comprises slots (16) for receiving the fastening means for connecting to the supporting tube (3).

## Revendications

1. Suspension pour caténaire à ligne de contact de véhicules à traction électrique, en particulier de véhicules sur rails, pour laquelle une pince maintenant la caténaire est prévue sur un organe de support verticalement mobile, l'organe de support (6) verticalement mobile étant constitué en forme de barre et étant guidé en direction axiale dans un boîtier, l'organe de support (6) étant muni à son extrémité opposée à la pince (8) d'une butée (14) empêchant une chute, **caractérisée en ce que** des galets (11) logés sur chaque axe horizontal (10) sont prévus sur le boîtier (7) pour guider l'organe de support (6) dans le boîtier (7).

2. Suspension selon la revendication 1, **caractérisée en ce que** les galets (11) sont munis chacun sur l'enveloppe extérieure d'une rainure périphérique (18), la rainure (18) comportant dans la zone de contact avec l'organe de support (6) en forme de barre, de préférence, un contre-profil correspondant au profil de l'organe de support (6) en forme de barre.

3. Suspension selon la revendication 1 ou 2, **caractérisée en ce que** les axes (10) des galets (11) passent parallèlement à l'axe longitudinal d'une voie correspondante.

4. Suspension selon l'une quelconque des revendications 1 à 3, **caractérisée en ce que** la butée (14) est appuyée sur un ressort de pression (13) sur le couvercle du boîtier (12).

5. Suspension selon la revendication 4, **caractérisée en ce qu'**un tube de butée (15) coaxial orienté vers l'extérieur pour l'organe de support (6) sort du couvercle (12) du boîtier, le ressort (13) étant guidé dans le tube de butée (15), lequel est entoure extérieurement l'organe de support (6).

6. Suspension selon l'une quelconque des revendications 1 à 5, **caractérisée en ce que** le boîtier (7) est fixé sur un tube de support (3) d'un système à console traditionnel (1).

7. Suspension selon la revendication 5, **caractérisée en ce que** le tube de support (3) passe parallèlement à l'inclinaison du plan de la voie.

8. Suspension selon la revendication 4 ou 5, **caractérisée en ce que** le boîtier (7) comporte des trous oblongs (16) pour recevoir des moyens de fixation pour raccordement avec le tube de support (3).
